# EUROPEAN PATENT APPLICATION

(11) **EP 2 128 743 A1**
(43) Date of publication of application: **02.12.2009**
(21) Application number: 08165470.9
(22) Date of filing: 30.09.2008
(51) Int. Cl.: G06F 3/033

(54) **Touch screen apparatus**

(30) Priority: 28.05.2008 TW 97119646
(71) Applicant: Delta Electronics, Inc., Taoyuan Hsien 333 (TW)
(72) Inventor: Chang, Sean, Taoyuan Hsien 333 (TW); Chang, Chii-How, Taoyuan Hsien 333 (TW)
(74) Representative: 2K Patentanwälte Blasberg Kewitz & Reichel

(57) **Abstract**

The invention provides a touch screen apparatus. The touch screen apparatus, applied to a touch panel, includes an indicating device and a processing module. The indicating device comprises a signal generating module and a conductive touch end, wherein the touch end touches the touch panel, and the signal generating module, electrically connecting with the touch end, generates an electric signal transmitted through the touch end. The processing module electrically connects with the touch panel to detect the electric signal, and calculates a contact position between the touch end and the touch panel according to the electric signal.

## Description

This Application claims priority of Taiwan Patent Application No. 97119646, filed on May 28, 2008, the entirety of which is incorporated by reference herein.

### BACKGROUND of the invention

### Field of the Invention

The invention relates to a touch screen apparatus, and in particular, to a touch screen apparatus featuring greater accuracy and more precise positioning.

### Description of the Related Art

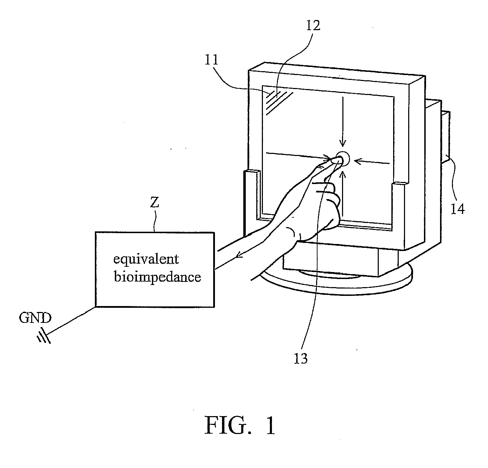

Fig. 1 is a schematic view depicting a conventional capacitive-type touch screen apparatus. In the conventional capacitive-type touch screen apparatus, the power 11 is inputted through four corners or four sides of the touch screen, and the electrode provides voltages to generate a uniform electric field 12. When a finger 13 touches the touch screen, an electric current, evoked on the four sides of the touch screen, passes through the equivalent bioimpedance Z to the ground. The distances from a contact point to the four sides of the touch screen are different, thus the current intensity on each side is accordingly different. Therefore, a controller 14 is able to calculate the position of the contact point according to the current intensity on the four sides.

However, the conventional capacitive-type touch screen apparatus is operated by finger contact. Because the human finger may require a large contact area when touching the touch screen, the contact position is inaccurate and lacks precision, and the display image is also blocked by the finger. Additionally, the equivalent impedance and the equivalent capacitance vary from person to person, and thus the current intensity also varies, resulting in contact position detection errors.

### Brief Summary of THE Invention

The objective of the invention is to provide a touch screen apparatus featuring a contact position with enhanced accuracy.

Accordingly, the invention provides a touch screen apparatus applied to a touch panel comprising an indicating device and a processing module. The indicating device comprises a signal generating module and a conductive touch end, wherein the touch end touches the touch panel, and the signal generating module, electrically connecting with the touch end, generates an electric signal transmitted through the touch end. The processing module electrically connects with the touch panel to detect the electric signal, and calculates a contact position between the touch end and the touch panel according to the electric signal.

The touch panel is preferably a capacitive-type touch panel. The electric signal is preferably an alternating signal. The signal generating module is preferably a SIN-wave generator. The touch panel is preferably formed by a protecting layer, an insulating layer, a conductive layer and a substrate.

According to the touch screen apparatus, the indicating device further comprises a wire, a battery and a holding portion. The wire connects the signal generating module and the touch end. The battery, a dry cell, a lithium cell, a mercuric oxide cell or a solar cell, provides power to the signal generating module. The holding portion, held by an operator, is conductive and electrically connects to the wire or a negative electrode of the battery to form a ground connection through a human body.

According to the touch screen apparatus, the touch end is made of elastic material or is a stiff tapered end or a stiff spherical end covered by an elastic member. The elastic member, which is conductive, covers a portion of the touch end or entire touch end.

According to the touch screen apparatus, the indicating device further comprises a fastening portion to engage and fix the touch end, wherein the fastening portion is conductive. Additionally, the processing module further comprises a detecting circuit and a controller. The detecting circuit is disposed on four sides or four corners of the control panel to detect the electric signal of the touch panel. The controller electrically connects with the detecting circuit to calculate the contact position between the touch end and the touch panel according the electric signal. The controller is preferably a microcontroller or a computer.

To achieve the objective, the invention provides another touch screen apparatus, applied to a touch panel, comprising an indicating device and a processing module. The indicating device comprises a holding portion and a conductive touch end, wherein the holding portion, held by an operator, electrically connects to the touch end to form a ground connection through a human body, and the touch end touches the touch panel. The processing module electrically connects with the touch panel to calculate a contact position between the touch end and the touch panel.

The touch end is made of elastic material or is a stiff tapered end or a stiff spherical end covered by an elastic member. The elastic member, which is conductive, covers a portion of the touch end or entire touch end. The indicating device further comprises a fastening portion to engage and fix the touch end, wherein the fastening portion is conductive.

The touch panel, a capacitive-type touch panel, is preferably formed by an insulating layer and a conductive layer, and further comprises a protecting layer and a substrate. In the touch screen apparatus, alternating current is inputted through four corners or four sides of the touch panel to form a uniform electric field. Moreover, the processing module further comprises a detecting circuit and a controller. The detecting circuit is disposed on the four sides or the four corners of the control panel to detect changes of the electric field. The controller electrically connects with the detecting circuit to calculate the contact position between the touch end and the touch panel according the changes of the electric field. The controller is preferably a microcontroller or a computer.

Additionally, the touch panel is a sonic-type touch panel and a sound signal is distributed on a surface of the touch panel. The processing module detects changes of the sound signal to calculate the contact position between the touch end and the touch panel. The processing module further comprises a controller, a transducer and a reflecting device. The controller, sending and receiving an electric signal, calculates the contact position between the touch end and the touch panel according to the electric signal. The transducer transduces the electric signal to a sound signal or transduces the sound signal to an electric signal. The reflecting device, disposed on a periphery of the touch panel, reflects the sound signal to the transducer.

In conclusion, the touch screen apparatus utilizes an indicating device with a signal generating module to transmit an electric signal to the touch panel, such that the processing module is able to calculate the contact position between the indicating device and the touch panel according the detected electric signal of the touch panel, thus improving the accuracy of the contact position when the touch panel is touched by fingers. Furthermore, the indicating device comprises a conductive holding portion to be held by an operator. The holding portion electrically connects to the touch end to form a ground connection through a human body, promoting improved signal integrity.

Furthermore, another embodiment of the touch screen apparatus is provided. By connecting the holding portion, held by an operator, to the touch end, the ground connection is achieved when the touch end contacts the touch panel. Thus, the uniform electric field is accordingly changed, such that the contact position between the touch end and the touch panel can be calculated. As a result, inaccuracy and imprecision of an image display by finger contact are all improved.

Moreover, another embodiment of the touch screen apparatus is provided. The touch end absorbs sound signals distributed on the surface of the touch panel to descend the potential thereof, such that the contact position between the touch end and the touch panel can be calculated, enhancing the accuracy thereof.

A detailed description is given in the following embodiments with reference to the accompanying drawings.

### BRIEF DESCRIPTION OF the DRAWINGS

The invention can be more fully understood by reading the subsequent detailed description and examples with references made to the accompanying drawings, wherein:

Fig. 1 is a schematic view of a conventional capacitive-type touch screen apparatus;

Fig. 2 is a schematic view of a preferred embodiment of a touch screen apparatus of the present invention;

Figs. 3A and 3B are schematic views showing variant touch ends of the touch screen apparatus according to the present invention;

Figs. 4A and 4B are schematic views showing different grounding modes of the touch screen apparatus according to the present invention;

Fig. 5 is a schematic view of a preferred embodiment of a variant touch screen apparatus of the present invention;

Figs. 6A and 6B are schematic views showing variant touch ends of another touch screen apparatus according to the present invention;

Fig. 7 is a schematic view of the touch screen apparatus of the present invention;

Fig. 8 is a schematic view of a preferred embodiment of another variant touch screen apparatus of the present invention; and

Fig. 9 is a schematic view of a preferred embodiment of another variant touch screen apparatus of the present invention.

### Detailed Description of the Invention

Referring to the relative figures, schematic views are shown to provide touch screen apparatuses of preferred embodiments, wherein same elements are referenced the same.

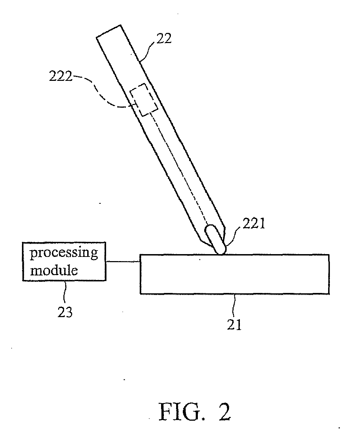

Fig. 2 is a schematic view of a preferred embodiment of a touch screen apparatus of the present invention. The touch screen apparatus comprises a touch panel 21, an indicating device 22 and a processing module 23. The indicating module 22 comprises a signal generating module 222 and a conductive touch end 221. The touch end 221 touches the touch panel 21, and the signal generating module 222, generating an electric signal, electrically connects with the touch end and transmits the electric signal through the touch end 221. The processing module 23 electrically connects with the touch panel 21. When the touch end 221 contacts the touch panel 21, the processing module 23 detects an electric signal of the touch panel 21 and calculates a contact position between the touch end 221 and the touch panel 22 according to the electric signal.

The touch panel is preferably a capacitive-type touch panel. The electric signal is preferably an alternating signal. The signal generating module is preferably a SIN-wave generator. The touch end is preferably made of elastic material. The processing module further comprises a detecting circuit disposed on four sides or four corners of the touch panel for detecting the electric signal, such that the processing module is able to calculate the contact position between the touch end and the touch panel according to the signal intensity on the four sides or the four corners of the touch panel.

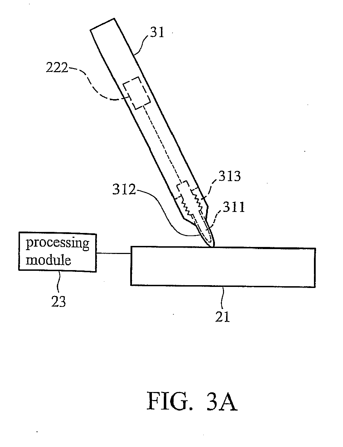

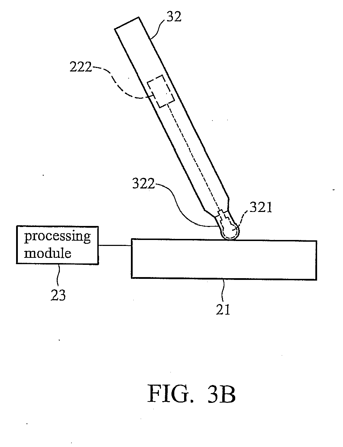

Fig. 3A is schematic views showing a variant touch end of the touch screen apparatus. The touch screen apparatus comprises a touch panel 21, an indicating device 31 and a processing module 23. The indicating device 31 comprises a signal generating module 222, a touch end 311, an elastic member 312 and a fastening portion 313. The embodiment differs from that of Fig. 2 in that the touch end 311 is surrounded by the elastic member 312. The elastic member 312, which is conductive, covers a portion of the touch end 311 or the entire touch end 311. Additionally, the touch end 311 is a stiff tapered end. The elastic member 312 is structured to cover the stiff tapered end, such that when the indicating device 31 touches the touch panel 21, the accuracy and the convenience of data input are not affected by the softness and the over deformation of the touch end 311. Further, the elastic member 312 provides protection for the touch panel 21 to avoid scratches thereon. Additionally, the fastening portion 313, engaging with the touch end 311, stabilizes and fixes the touch end 311 when the indicating device 31 contacts the touch panel 21. The fastening portion 313 can be conductive according to requirement. Referring to Fig. 3B, it differs from Fig. 3A in that the touch end 321 of the indicating device 32 is a stiff spherical end covered by the elastic member 322.

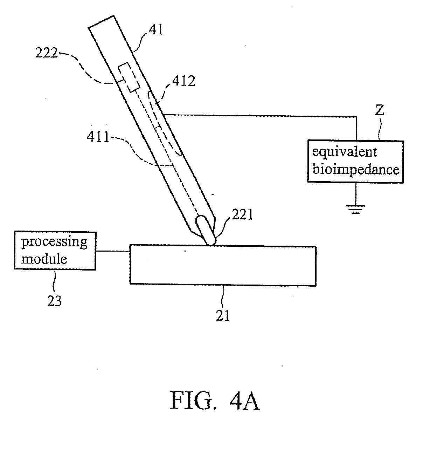

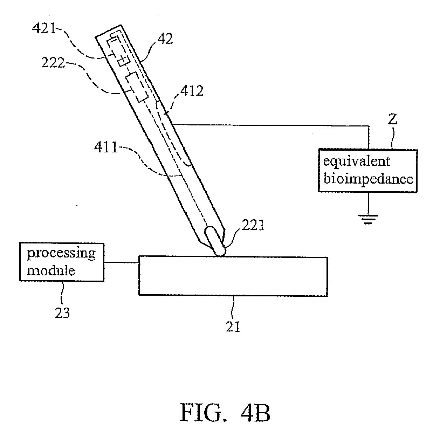

Figs. 4A and 4B are schematic views showing different grounding modes of the touch screen apparatus. As shown in Fig. 4A, the touch screen apparatus comprises a touch panel, an indicating device 41 and a processing module 23. The indicating device 41 comprises a signal generating module 222, a touch end 221, a holding portion 412 and a wire 411. The embodiment differs from that of Fig. 2 in that the indicating device 41 comprises the wire 411, electrically connecting the signal generating module 222 and the touch end 221, and the holding portion 412 is to be held by an operator. The holding portion 412, which is conductive, electrically connects to the wire 411 and connects to the ground through an equivalent bioimpedance Z.

Moreover, in Fig. 4B, the indicating device 42 comprises a battery 421 providing power to the signal generating module 222. The holding portion 412 connects to a negative electrode of the battery 421, and then connects to the ground through the equivalent bioimpedance Z. As shown in Figs. 4A and 4B, such a structure improves the signal integrity of the electric signal generated by the signal generating module 222, thus increasing the accuracy and precision of the calculation of the contact position between the touch end 221 and the touch panel 21 by the processing module 23. The battery is preferably a dry cell, a lithium cell, a mercuric oxide cell or a solar cell.

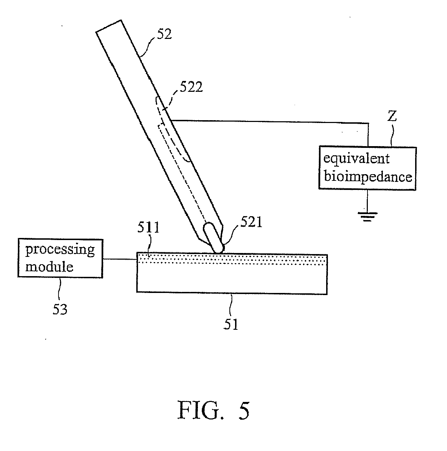

Fig. 5 is a schematic view of a preferred embodiment of a variant touch screen apparatus of the invention. The contact screen apparatus comprises a touch panel 51, an indicating device 52 and a processing module 53. A uniform electric field is distributed on a surface of the touch panel 51. The electric field is preferably formed by inputting alternating current to the four corners or the four sides of the touch panel 51. The indicating device 52 comprises a holding portion 522, which is conductive, and a touch end 521. The touch end 21 touches the touch panel 51, and the holding portion 522, held by an operator, electrically connects with the touch end 521. When the touch end 521 touches the touch panel 51, the electric current is evoked on the four sides or the four corners of the touch panel 51. The electric current flows to the holding portion 522 through the touch end 521 of the indicating device 52 and connects to the ground through equivalent bioimpedance Z, successfully making ground connection through a human body. The processing module 53, electrically connecting with the touch panel 51, detects the changes of the electric field on the touch panel 51 to calculate the contact position between the touch end 521 and the touch panel 51. Further, the processing module 53 comprises a detecting circuit disposed on the four sides or four corners of the touch panel 51. Because the current intensity is inverse to the distance, when the distances from the contact point to the four sides or the four corners of the touch panel 51 are different, the currents detected on the four sides or the four corners of the touch panel 51 are also different. Thus, the contact position can be accordingly calculated.

The touch panel is preferably a capacitive-type touch panel, and the touch end is preferably made of an elastic material.

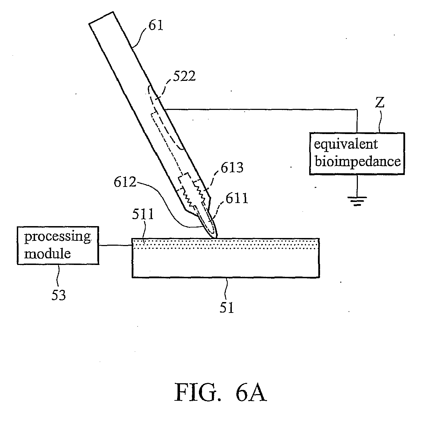

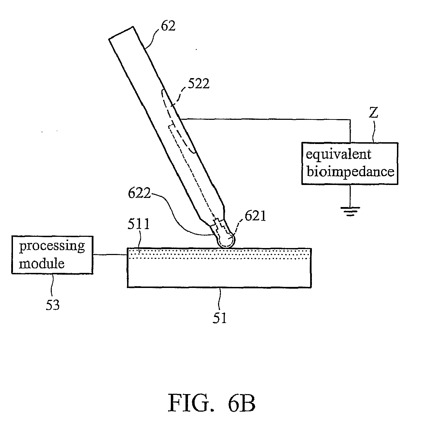

Fig. 6A is schematic view showing variant touch ends of another touch screen apparatus. The touch screen apparatus comprises a touch panel 51, an indicating device 61 and a processing module 53. The indicating device 52 comprises a touch end 611, a holding portion 522, an elastic member 612 and a fastening portion 613. The embodiment differs from that of Fig. 5 in that the touch end 611 is surrounded by the elastic member 612. The elastic member 612, which is conductive, covers a portion of the touch end 611 or the entire touch end 611. Additionally, the touch end 611 is a stiff tapered end. The elastic member 612 is structured to cover the stiff tapered end, such that when the indicating device 61 touches the touch panel 51, the accuracy and the convenience of data input are not affected by the softness and the over deformation of the touch end 611. Further, the elastic member 612 provides protection for the touch panel 51 to avoid scratches thereon. Additionally, the fastening portion 613 of the embodiment, engaging with the touch end 611, stabilizes and fixes the touch end 611 when the indicating device 61 contacts the touch panel 51. The fastening portion 63 can be conductive according to requirement. Referring to Fig. 6B, it differs from Fig. 6A in that the touch end 621 of the indicating device 62 is a stiff spherical end covered by the elastic member 622.

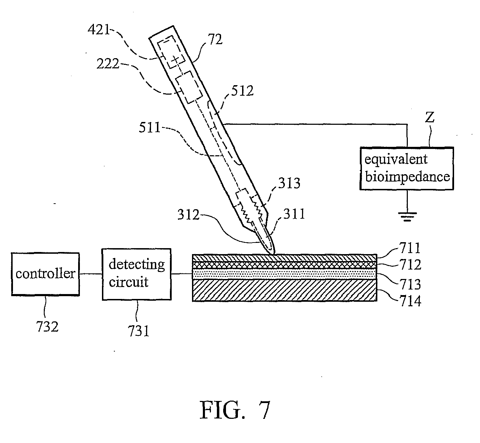

Fig. 7 is a schematic view of the touch screen apparatus of the invention. In all embodiments described previously, the processing module comprises a detecting circuit 731, coupled to the touch panel, and a controller 732, coupled to the detecting circuit 731, for calculating the contact position between the indicating device 72 and the touch panel. In the described embodiments, the controller 732 is preferably a microcontroller or a computer. The touch panel is formed by a protecting layer 711, an insulating layer 712, a conductive layer 713 and a substrate 714, wherein the positions of the protecting layer 711 and the insulating layer 712 are interchangeable. The touch screen apparatus is applied to a capacitive-type touch panel.

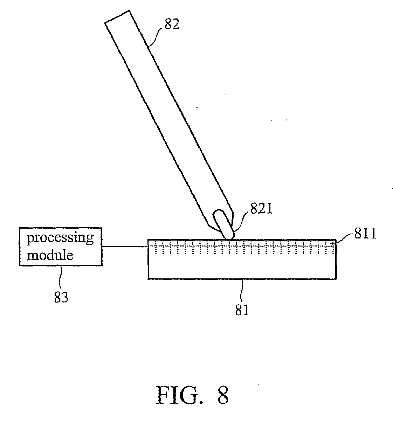

Fig. 8 is a schematic view of a preferred embodiment of another variant touch screen apparatus of the invention. The touch screen apparatus comprises a touch panel 81, an indicating device 82 and a processing module 83. A sound signal is distributed on a surface of the touch panel 81. The indicating device 82 comprises a touch end 821 touching the touch panel 81. The processing module 83, electrically connecting with the touch panel 81, detects changes of the sound signal 811 on the touch panel 81 to calculate the contact position between the touch end 821 and the touch panel 81.

The touch panel is preferably a sonic-type touch panel. The touch end is made of an elastic material or is a stiff tapered end or a stiff spherical end covered by an elastic member. The elastic member, which is conductive, covers a portion of the touch end or the entire touch end. The indicating device further comprises a fastening portion to engage and fix the touch end, wherein the fastening portion may be conductive.

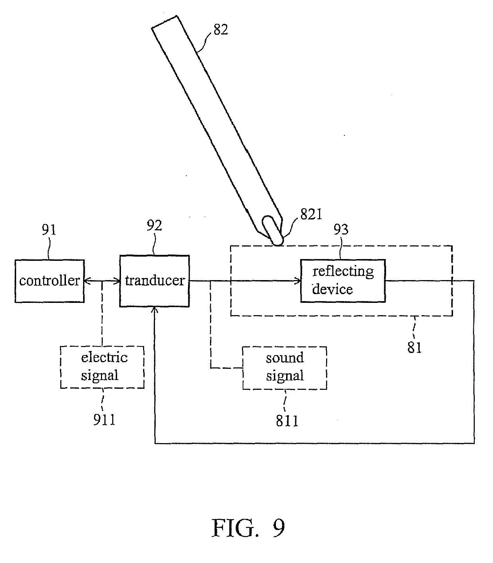

Fig. 9 is a schematic view of a preferred embodiment of another variant touch screen apparatus of the invention. The embodiment differs from that of Fig. 8 in that the processing module further comprises a controller 91, a plurality of transducers 92 and a plurality of reflecting devices 93. The controller 91, sending and receiving an electric signal, calculates the contact position between the touch end 821 and the touch panel 81 according to the electric signal. The transducers 92 transduce the electric signal to a sound signal or transduce the sound signal to an electric signal. The reflecting devices 93, disposed on the four sides of the four corners of the touch panel 81, reflect the sound signal 811 to the transducers 92.

In summary, the touch screen apparatus utilizes a indicating device with a signal generating module to transmit an electric signal to the touch panel so that the processing module is able to calculate the contact position between the indicating device and the touch panel according to the detected electric signal of the touch panel, thus improving the accuracy of the contact position. Furthermore, the indicating device comprises a conductive holding portion to be held by an operator. The holding portion electrically connects to the touch end to form a ground connection through a human body, thereby enhancing the intensity of the signal.

Furthermore, another embodiment of the touch screen apparatus is provided. By connecting the holding portion, held by an operator, to the touch end, the ground connection is achieved when the touch end contacts the touch panel. The uniform electric field is accordingly changed, such that the contact position between the touch end and the touch panel can be calculated. As a result, inaccuracy, and imprecision of an image display by finger contact are all improved.

Moreover, another embodiment of the touch screen apparatus is provided. The touch end absorbs sound signals distributed on the surface of the touch panel to descend the potential thereof, such that the contact position between the touch end and the touch panel can be calculated, enhancing the accuracy thereof.

The touch screen apparatus of the invention can be applied to any portable device, a computer, an electric appliance, a game machine, an automobile electronic device, a gambling machine, a ticket machine, a vending machine or industrial computer products.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A touch screen apparatus applied to a touch panel, comprising:
an indicating device comprising a signal generating module and a conductive touch end for touching the touch panel, wherein the signal generating module is electrically connected with the touch end and generates an electric signal transmitted through the touch end; and
a processing module electrically connected with the touch panel to detect the electric signal and calculate a contact position between the touch end and the touch panel according to the electric signal.

2. The touch screen apparatus as claimed in claim 1, wherein the indicating device further comprises a wire connecting the signal generating module and the touch end, wherein the indicating device preferably further comprises a holding portion which is conductive, electrically connected to the wire, and held by a user.

3. The touch screen apparatus as claimed in claims 1 or 2, wherein the indicating device further comprises a battery providing power to the signal generating module, and the battery is a dry cell, a lithium cell, a mercuric oxide cell or a solar cell.

4. The touch screen apparatus as claimed in claim 1 or 2, wherein the indicating device further comprises a holding portion and a battery, and the holding portion is conductive, electrically connected to a negative electrode of the battery held by a user.

5. The touch screen apparatus as claimed in any of the preceding claims, wherein the touch panel is a capacitive-type touch panel.

6. The touch screen apparatus as claimed in any of the preceding claims, wherein the touch end is surrounded by a conductive elastic member covering a portion or entire portion of the touch end.

7. The touch screen apparatus as claimed in claim 6, wherein the touch end is a stiff tapered or spherical end covered by the elastic member or wherein the touch end is made of elastic material.

8. The touch screen apparatus as claimed in any of the preceding claims, wherein the indicating device further comprises a fastening portion to engage and fix the touch end, wherein the fastening portion is preferably conductive.

9. The touch screen apparatus as claimed in any of the preceding claims, wherein the signal generating module is a SIN-wave generator, and the electric signal is an alternating signal.

10. The touch screen apparatus as claimed in any of the preceding claims, wherein the processing module further comprises a detecting circuit and a controller, the detecting circuit is disposed on a periphery or a corner of the control panel to detect the electric signal of the touch panel, and the controller is electrically connected with the detecting circuit to calculate the contact position between the touch end and the touch panel according to the electric signal, wherein the controller is preferably a microcontroller or a computer.

11. The touch screen apparatus as claimed in any of the preceding claims, wherein the touch panel is formed by an insulating layer and a conducting layer stacked, wherein the touch panel preferably further comprises a protecting layer and a substrate.

12. The touch screen apparatus as claimed in any of the preceding claims, wherein the touch screen apparatus is applied to a portable device, a computer, an electric appliance, a game machine, an automobile electronic device, a gambling machine, a ticket machine, a vending machine or industrial computer products.

13. A touch screen apparatus applied to a touch panel comprises:
an indicating device comprising a conductive holding portion and a conductive touch end, wherein the holding portion is held or configured to be held by a user and electrically connected to the touch end, and the touch end touches the touch panel; and
a processing module electrically connected with the touch panel to calculate a contact position between the touch end and the touch panel.

14. The touch screen apparatus as claimed in claim 13, wherein the touch end is surrounded by an conductive elastic member covering a portion or entire portion of the touch end and wherein the touch end is preferably a tapered or spherical end covered by the elastic member.

15. The touch screen apparatus as claimed in claim 14, wherein the touch panel is a capacitive-type touch panel, a uniform electric field is formed on a surface of the touch panel, the processing module further comprises a detecting circuit and a controller, the detecting circuit is disposed on a periphery or a corner of the control panel to detect changes of the electric field, and the controller is electrically connected with the detecting circuit to calculate the contact position between the touch end and the touch panel according to the changes of the electric field.

16. The touch screen apparatus as claimed in claim 14, wherein the touch panel is a sonic-type touch panel, a sound signal is distributed on a surface of the touch panel, and the processing module detects changes of the sound signal to calculate the contact position between the touch end and the touch panel.

17. The touch screen apparatus as claimed in claim 16, wherein the processing module further comprises:
a controller sending and receiving an electric signal, and calculating a contact position between the touch end and the touch panel according to the electric signal;
a transducer transducing the electric signal to a sound signal or transducing the sound signal to the electric signal; and
a reflecting device disposed on a edge of the touch panel for reflecting the sound signal to the transducer.

## Amended claims

### Amended claims in accordance with Rule 137(2) EPC.

**1.** A touch screen apparatus applied to a touch panel, comprising:
an indicating device comprising a signal generating module and a touch end for touching the touch panel and transmitting a signal generated by said signal generating module through the touch end to said touch panel; and
a processing module electrically connected with the touch panel to detect the signal and calculate a contact position between the touch end and the touch panel according to the signal;
**characterized in that** said touch end is conductive, said signal generated by said signal generating module is an electric signal and **in that** the signal generating module is electrically connected with the touch end for transmitting said electric signal through the touch end to said touch panel,
said processing module being configured to detect said electric signal and to calculate the contact position between the touch end and the touch panel according to the electric signal.

**2.** The touch screen apparatus as claimed in claim 1, wherein the indicating device further comprises a wire electrically connecting the signal generating module and the touch end, wherein the indicating device preferably further comprises a holding portion which is conductive, electrically connected to the wire, and configured to held by a user.

**3.** The touch screen apparatus as claimed in claims 1 or 2, wherein the indicating device further comprises a battery providing power to the signal generating module, and the battery is a dry cell, a lithium cell, a mercuric oxide cell or a solar cell.

**4.** The touch screen apparatus as claimed in claim 1 or 2, wherein the indicating device further comprises a holding portion and a battery, and the holding portion is conductive, electrically connected to a negative electrode of the battery and configured to be held by a user.

**5.** The touch screen apparatus as claimed in any of the preceding claims, wherein the touch panel is a capacitive-type touch panel.

**6.** The touch screen apparatus as claimed in any of the preceding claims, wherein the touch end is surrounded by a conductive elastic member covering a portion or entire portion of the touch end.

**7.** The touch screen apparatus as claimed in claim 6, wherein the touch end is a stiff tapered or spherical end covered by the elastic member or wherein the touch end is made of elastic material.

**8.** The touch screen apparatus as claimed in any of the preceding claims, wherein the indicating device further comprises a fastening portion to engage and fix the touch end, wherein the fastening portion is preferably conductive.

**9.** The touch screen apparatus as claimed in any of the preceding claims, wherein the signal generating module is a SIN-wave generator, and the electric signal is an alternating signal.

**10.** The touch screen apparatus as claimed in any of the preceding claims, wherein the processing module further comprises a detecting circuit and a controller, the detecting circuit is disposed on a periphery or a corner of the control panel to detect the electric signal of the touch panel, and the controller is electrically connected with the detecting circuit to calculate the contact position between the touch end and the touch panel according to the electric signal, wherein the controller is preferably a microcontroller or a computer.

**11.** The touch screen apparatus as claimed in any of the preceding claims, wherein the touch panel is formed by an insulating layer and a conducting layer stacked, wherein the touch panel preferably further comprises a protecting layer and a substrate.

**12.** The touch screen apparatus as claimed in any of the preceding claims, wherein the touch screen apparatus is applied to a portable device, a computer, an electric appliance, a game machine, an automobile electronic device, a gambling machine, a ticket machine, a vending machine or industrial computer products.

**13.** A touch screen apparatus applied to a touch panel comprising:
an indicating device comprising a holding portion configured to be held by a user and a touch end for touching the touch panel; and
a processing module electrically connected with the touch panel to calculate a contact position between the touch end and the touch panel;
**characterized in that** said touch end is conductive, the holding portion is electrically connected to the touch end of said indicating device and **in that** said processing module is configured to calculate the contact position between the touch end and the touch panel based on an electric signal.

**14.** The touch screen apparatus as claimed in claim 13, wherein the touch end is surrounded by an conductive elastic member covering a portion or entire portion of the touch end and wherein the touch end is preferably a tapered or spherical end covered by the elastic member.

**15.** The touch screen apparatus as claimed in claim 14, wherein the touch panel is a capacitive-type touch panel, a uniform electric field is formed on a surface of the touch panel, the processing module further comprises a detecting circuit and a controller, the detecting circuit is disposed on a periphery or a corner of the control panel to detect changes of the electric field, and the controller is electrically connected with the detecting circuit to calculate the contact position between the touch end and the touch panel according to the changes of the electric field.

**16.** The touch screen apparatus as claimed in claim 14, wherein the touch panel is a sonic-type touch panel, a sound signal is distributed on a surface of the touch panel, and the processing module detects changes of the sound signal to calculate the contact position between the touch end and the touch panel.

**17.** The touch screen apparatus as claimed in claim 16, wherein the processing module further comprises:
a controller sending and receiving an electric signal, and calculating a contact position between the touch end and the touch panel according to the electric signal;
a transducer transducing the electric signal to a sound signal or transducing the sound signal to the electric signal; and
a reflecting device disposed on a edge of the touch panel for reflecting the sound signal to the transducer.
